# EUROPEAN PATENT APPLICATION

(11) **EP 3 822 876 A2**
(43) Date of publication of application: **19.05.2021**
(21) Application number: 21163891.1
(22) Date of filing: 22.03.2021
(51) Int. Cl.: G06Q 10/00

(54) **METHOD AND APPARATUS FOR PREDICTING DESTINATION, ELECTRONIC DEVICE AND STORAGE MEDIUM**

(30) Priority: 26.08.2020 CN 202010872564
(71) Applicant: BEIJING BAIDU NETCOM SCIENCE AND TECHNOLOGY CO. LTD., 100085 Beijing (CN)
(72) Inventor: LIANG, Zhenduo, Beijing, 100085 (CN); BING, Feng, Beijing, 100085 (CN); YUAN, Zichao, Beijing, 100085 (CN); ZHANG, Yan, Beijing, 100085 (CN); JIA, Kaikai, Beijing, 100085 (CN)
(74) Representative: Gill Jennings & Every LLP

(57) **Abstract**

The present disclosure discloses a method and apparatus for predicting a destination, an electronic device and a storage medium, and relates to the field of artificial intelligence technology. A specific implementation comprises: acquiring personalized data of a user and space-time scenario data of the user at a current moment; predicting, through a pre-trained prediction model, a target destination of the user at the current moment based on the personalized data, the space-time scenario data and an attribute feature of each pre-determined candidate destination; and recommending the target destination to the user. The embodiment of the present disclosure may effectively improve the accuracy of the destination prediction and is suitable for more general travel scenarios, and thus, the user experience may be improved.

## Description

### TECHNICAL FIELD

The present disclosure relates to the field of computer technology, further to an artificial intelligence technology, and particularly to a method and apparatus for predicting a destination, an electronic device and a storage medium.

### BACKGROUND

A destination prediction refers to a technique of predicting and recommending, through an analysis for a usage behavior history of a user and in combination with a current usage scenario, a future travel destination of the user in a location-based service (LBS for short). With the development of mobile Internet and artificial intelligence technology, there is an increasing demand for personalization of a location-based service product (e.g., an electronic map). How to be able to precisely display user behavior-based personalized content becomes critical. If the future travel destination of the user may be accurately predicted and preferentially displayed, a usage path of the user is shortened, and at the same time, intelligent experience may also be brought to the user.

In an existing technology, at present, the destination prediction is generally achieved by adopting the following two schemes. Scheme 1) Destination prediction is performed based on a most recent usage behavior of the user: A point of interest (POI for short) that the user searches or browses several times in recent time as a destination of an upcoming travel of the user. Scheme 2) Destination prediction is performed based on statistics and rules: In accordance with certain rules, candidate destinations such as a historical search record of the user and a place that the user frequently goes to are first comprehensively sorted according to a frequency and based on a scenario such as a time scenario and a location scenario. A place with a high rank is used as a target destination.

The above two schemes have a certain degree of defects. In Scheme 1), the destination is only recognized from the most recent travel behavior of the user. Accordingly, it is easy to occur that the user has no travel need or travel condition at present. At this time, an accurate recommendation to the user would result in poor user experience. In Scheme 2), the sorting rule may only be applicable to limited scenarios and thus lacks universality, and the prediction accuracy is not high. In addition, if there is a prediction error, it is also required to manually intervene the sorting result through a service logic. The branch logic of a program is complex, and the coupling between the sorting and the service is serious. Thus, it is not easy to perform maintenance, and the robustness of the service is poor.

### SUMMARY

The present disclosure provides a method and apparatus for predicting a destination, an electronic device and a storage medium, which may effectively improve the accuracy of a destination prediction and is suitable for more general travel scenarios, and thus, the user experience may be improved.

In a first aspect, embodiments of the present disclosure provide a method for predicting a destination, comprising: acquiring personalized data of a user and space-time scenario data of the user at a current moment; predicting, through a pre-trained prediction model, a target destination of the user at the current moment based on the personalized data, the space-time scenario data and an attribute feature of each pre-determined candidate destination; and recommending the target destination to the user.

In a second aspect, embodiments of the present disclosure provide an apparatus for predicting a destination, comprising: the acquiring module is configured to acquire personalized data of a user and space-time scenario data of the user at a current moment; the predicting module is configured to predict, through a pre-trained prediction model, a target destination of the user at the current moment based on the personalized data, the space-time scenario data and an attribute feature of each pre-determined candidate destination; and the recommending module is configured to recommend the target destination to the user.

In a third aspect, embodiments of the present disclosure provide an electronic device, comprising: one or more processors; and a storage apparatus, storing one or more programs thereon, wherein the one or more programs, when executed by the one or more processors, cause the one or more processors to implement the method provided by the first aspect.

In a forth aspect, embodiments of the present disclosure provide a computer-readable medium, storing a computer program thereon, wherein the program, when executed by a processor, causes the processor to implement the method provided by the first aspect.

In a fifth aspect, embodiments of the present disclosure provide a computer program product including a computer program, where the computer program, when executed by a processing apparatus, implements the method provided by the first aspect.

According to the technology of the present disclosure, the technical problems in the existing technology that the accuracy of destination prediction is not high, the existing technology may only be applicable to limited travel scenarios and the user experience is poor are solved. The technical solution provided by the present disclosure may effectively improve the accuracy of the destination prediction and is suitable for more general travel scenarios, and thus, the user experience may be improved.

It should be understood that the content described in this section is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

Accompanying drawings are used for a better understanding of the scheme, and do not constitute a limitation to the present disclosure. Here:
Fig. 1 is a schematic flowchart of a method for predicting a destination provided in an embodiment of the present disclosure;
Fig. 2 is a schematic flowchart of another method for predicting a destination provided in an embodiment of the present disclosure;
Fig. 3 is a schematic structural diagram of a machine learning model provided in an embodiment of the present disclosure;
Fig. 4 is a schematic structural diagram of a neural network model provided in an embodiment of the present disclosure;
Fig. 5 is a schematic structural diagram of an apparatus for predicting a destination provided in an embodiment of the present disclosure;
Fig. 6 is a schematic structural diagram of a predicting module provided in an embodiment of the present disclosure; and
Fig. 7 is a block diagram of an electronic device adapted to implement a method for predicting a destination according to embodiments of the present disclosure.

### DETAILED DESCRIPTION OF EMBODIMENTS

Exemplary embodiments of the present disclosure are described below in combination with the accompanying drawings, and various details of the embodiments of the present disclosure are comprised in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

### First Embodiment

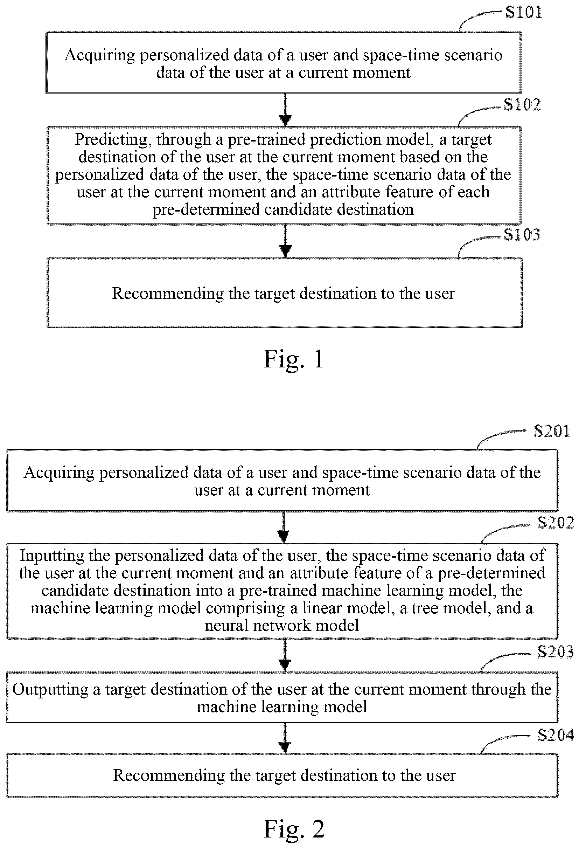

Fig. 1 is a schematic flowchart of a method for predicting a destination provided in a first embodiment of the present disclosure. The method may be performed by an apparatus for predicting a destination or an electronic device. The apparatus and the electronic device may be implemented by means of software and/or hardware, and may be integrated in any smart device having a network communication function. As shown in Fig. 1, the method for predicting a destination may comprise the following steps:

S101, acquiring personalized data of a user and space-time scenario data of the user at a current moment.

In a particular embodiment of the present disclosure, the electronic device may acquire the personalized data of the user and the space-time scenario data of the user at the current moment. Here, the personalized data comprises at least user feature data and behavior feature data. Here, the user feature data comprises at least one of: a gender, an age, an occupation category, an industry to which the user belongs, a company to which the user belongs, an income level, an asset condition, or a consumption level. The behavior feature data comprises at least one of: a retrieval location, a navigation location, or a arrival location. An attribute feature comprises at least one of: location coordinates of each candidate destination, a type of a point of interest, or a location tag. The type of the point of interest here may comprise: a life service, food, shopping, a hotel, leisure and entertainment, educational training, an automobile service, a transportation facility, a government structure, etc. The location tag may comprise: an inside/outside of the point of interest, a periphery of the point of interest, an entrance, an exit, etc.

Particularly, the user may fill in the user feature data and the behavior feature data in advance on the App of the method for predicting a destination. By analyzing the user feature data and the behavior feature data in detail, a most suitable or possible destination may be recommended to the user through a prediction model, and thus, the travel efficiency of the user may be promoted.

Further, the space-time scenario data may comprise time scenario data and space scenario data. Here, the time scenario data comprises at least one of: a season the user is in, a month, an intra-month period, a week, a working day or a non-working day, a day or a night, a morning or an afternoon, a morning rush hour or an evening rush hour, or a special time period. Particularly, the season the user is in may comprise spring, summer, autumn and winter; or may comprise a dry season and a rainy season. In addition, the season the user is in may further comprise a type of the season the user is in, for example, summer all year round, winter all year round, long summer and no winter, long winter and no summer, four-distinct-season, and spring like all year round. The month may comprise January to December. The intra-month period may comprise: the beginning of a month (the first ten days of the month), the middle of the month (the middle ten days of the month), and the end of the month (the last ten days of the month). Here, the first ten days, the middle ten days, and the last ten days of a month may refer to the first day to the tenth day, the eleventh day to the twentieth day, and the twenty-first day to the thirtieth day (the thirty-first day) of a month, respectively. The week may comprise: Monday to Sunday. The working day may comprise Monday to Friday. The non-working day may comprise Saturday and Sunday. The day may refer to the period from 8 a.m. to 8 p.m., and the night may refer to the period from 8 p.m. to 8 a.m. of the following day. The morning may be from 8 a.m. to 12 a.m., and the afternoon may be from 12 a.m. to 5 p.m.. The special time period may be a time period defined according to an actual situation, for example, the special time period may be a traffic control time period. According to the embodiment of the present disclosure, a most suitable or possible destination in the current time scenario is recommended to the user by finely subdividing the current time scenario of the user and in combination with a big data analysis for group data.

Further, the spatial scenario data comprises at least one of: location scenario data, weather scenario data, or travel scenario data. Here, the location scenario data comprises at least one of: a country or a city where the user is located, the user being in the locality or in a strange place, or the user being in a familiar place or an unfamiliar place. The weather scenario data comprises at least one of: sunny, overcast, cloudy, partly cloudy, light rain, moderate rain, heavy rain, shower, thundershower, rainstorm, fog, haze, frost, wind, storm wind, typhoon, snowstorm, heavy snow, moderate snow, light snow, sleet, hail, floating dust, or blowing sand. Through a judgment for weather information, a most suitable and safe travel mode is recommended to the user, thereby guaranteeing the travel experience of the user. Further, the travel scenario data comprises at least one of: a space type of a place where the user is located, a space type of a place through which the user passes, a space type of a destination of the user, a traffic condition of the place where the user is located, a traffic condition of the place through which the user passes, or a traffic condition of the destination of the user. Here, the space type comprises at least one of: a commercial area, a residential area, a city center, an outer suburb, a hospital, a school, or a government agency. The traffic condition comprises at least one of: a parking difficulty, a difficulty of taking a taxi, and a public traffic development level. Particularly, the user being in the locality refers to that the city where the user is currently located is the same as the habitual residence of the user. The user being in the strange place refers to that the city where the user is currently located is different from the habitual residence of the user. The user being in the familiar place refers to that the current location of the user is a residential place, a work place, a habitual residence or a frequently visited place of the user. The user being in the unfamiliar place refers to that the current location of the user is a place other than the residential place, the work place, the habitual residence or the frequently visited place of the user. In addition, the parking difficulty may be divided into a plurality of levels, for example, easy to park, relatively easy to park, difficult to park, and very difficult to park. The difficulty of taking the taxi may also be divided into a plurality of levels, for example, easy to take the taxi, relatively easy to take the taxi, relatively difficult to take the taxi, and very difficult to take the taxi. Moreover, the public traffic development level may be represented by adopting an evaluation index, for example, an index of a level of investment in construction, an index of a level of an operation service, and an index of a level of a comprehensive benefit.

S102, predicting, through a pre-trained prediction model, a target destination of the user at the current moment based on the personalized data of the user, the space-time scenario data of the user at the current moment and an attribute feature of each pre-determined candidate destination.

In a particular embodiment of the present disclosure, the electronic device may predict, through the pre-trained prediction model, the target destination of the user at the current moment based on the personalized data of the user, the space-time scenario data of the user at the current moment and the attribute feature of the each pre-determined candidate destination. Particularly, the electronic device may first input the personalized data of the user, the space-time scenario data of the user at the current moment and the attribute feature of the pre-determined candidate destination into a pre-trained machine learning model. Then, the electronic device may output the target destination of the user at the current moment through the machine learning model. Here, the machine learning model comprises, but not limited to, a linear model, a tree model, and a neural network model.

S103, recommending the target destination to the user.

In a particular embodiment of the present disclosure, the electronic device may recommend the target destination to the user. Particularly, the electronic device may recommend to the user only one destination most suitable for selection by the user, or may recommend to the user all of a plurality of destinations relatively suitable for selection by the user, which will not be limited here.

According to the method for predicting a destination provided in the embodiment of the present disclosure, the personalized data of the user and the space-time scenario data of the user at the current moment are first acquired. Then, based on the personalized data of the user, the space-time scenario data of the user at the current moment and the attribute feature of the each pre-determined candidate destination, the target destination of the user at the current moment is predicted through the pre-trained prediction model. Next, the target destination is recommended to the user. That is, according to the present disclosure, the target destination of the user at the current moment may be predicted through the pre-trained prediction model. However, in the existing method of predicting the destination, the destination is only recognized from the most recent travel behavior of the user, or the destination prediction is performed based on statistics and rules. Since the technical means that the target destination of the user at the current moment is predicted through the pre-trained prediction model is adopted in the present disclosure, the technical problems in the existing technology that the accuracy of destination prediction is not high, the existing technology may only be applicable to limited travel scenarios and the user experience is poor are overcome. The technical solution provided by the present disclosure may effectively improve the accuracy of the destination prediction and is suitable for more general travel scenarios, and thus, the user experience may be improved. In addition, the technical solution in the embodiment of the present disclosure is simple and convenient to be implemented and easy to be popularized, and has a wider application range.

### Second Embodiment

Fig. 2 is a schematic flowchart of another method for predicting a destination provided in an embodiment of the present disclosure. As shown in Fig. 2, the method for predicting a destination may comprise the following steps:
S201, acquiring personalized data of a user and space-time scenario data of the user at a current moment.

S202, inputting the personalized data of the user, the space-time scenario data of the user at the current moment and an attribute feature of a pre-determined candidate destination into a pre-trained machine learning model, the machine learning model comprising, but not limited to, a linear model, a tree model, and a neural network model.

In a particular embodiment of the present disclosure, the electronic device may input the personalized data of the user, the space-time scenario data of the user at the current moment and the attribute feature of the pre-determined candidate destination into the pre-trained machine learning model. Here, the machine learning model comprises, but not limited to, the linear model, the tree model, and the neural network model.

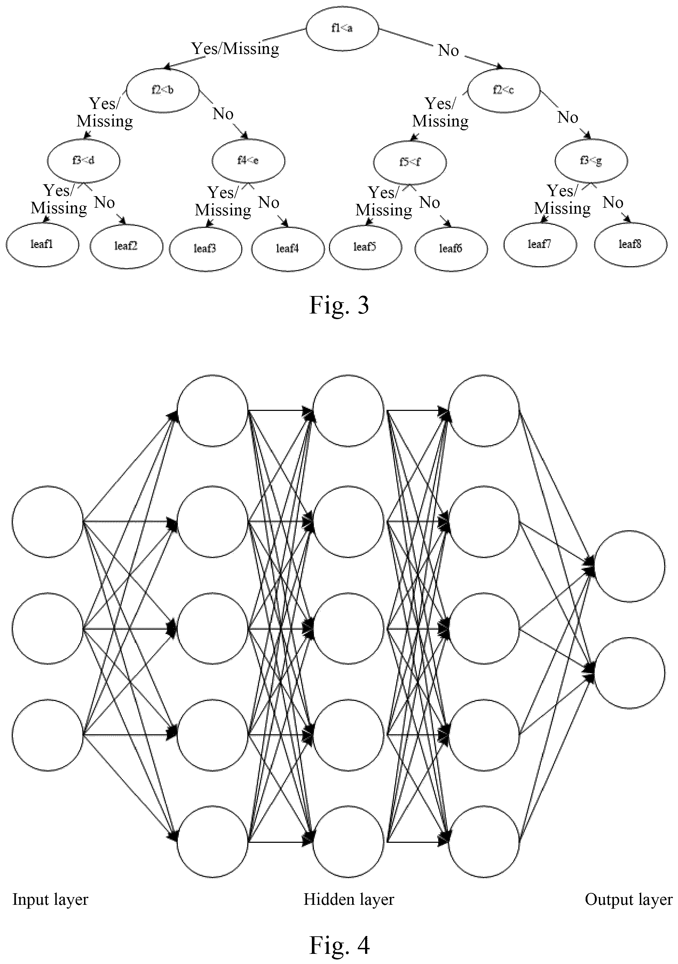

Fig. 3 is a schematic structural diagram of a machine learning model provided in an embodiment of the present disclosure. The model comprises a root node (root), several internal nodes and several leaf nodes (leaf). The leaf nodes correspond to a final discrimination result, i.e., the gain for the destination, and the other nodes correspond to a division for a certain feature that is performed according to a different threshold value. At the beginning of each round, a global sample starts from the root node, and is divided into different sub-nodes according to a result of a feature test. The leaf nodes obtain an output value of this round and calculate a residual error. Finally, the residual error is continuously reduced through a plurality of rounds of iterations, and thus, a model having a strong generalization capability is finally generated. As shown in Fig. 3, the root node is f1, the internal nodes are f2, f3, f4 and f5, and the leaf nodes are leaf1, leaf2, leaf3, leaf4, leaf5, leaf6, leaf7 and leaf8. In a particular embodiment of the present disclosure, the electronic device may input the personalized data of the user, the space-time scenario data of the user at the current moment and the attribute feature of the pre-determined candidate destination into f1 of the model, and finally determine a certain leaf node or certain leaf nodes as the target destination by performing a judgement layer by layer. For example, it is assumed that the current node travels first to "f1<a" If a judgement result for "f1<a" is "yes" or "missing," the current node travels to "f2<b," otherwise, the current node travels to "f2<c." If a judgement result for "f2<b" is "yes" or "missing," the current node travels to "f3<d," otherwise, the current node travels to "f4<e." If a judgement result for "f2<c" is "yes" or "missing," the current node travels to "f5<f," otherwise, the current node travels to "f3<g." If a judgement result for "f3<d" is "yes" or "missing," the current node travels to leaf1, otherwise, the current node travels to leaf2. If a judgement result for "f4<e" is "yes" or "missing," the current node travels to leaf3, otherwise, the current node travels to leaf4. If a judgement result for "f5<f' is "yes" or "missing," the current node travels to leaf5, otherwise, the current node travels to leaf6. If a judgement result for "f3<g" is "yes" or "missing," the current node travels to leaf7, otherwise, the current node travels to leaf8. Here, a, b, c, d, e, f and g are preset threshold values, respectively. It should be noted that, Fig. 3 shows only an example of a tree model. In particular application, the numbers of the internal nodes and the leaf nodes in the tree model may be set according to the actual application scenario, which will not be limited here.

Fig. 4 is a schematic structural diagram of a neural network model provided in an embodiment of the present disclosure. As shown in Fig. 4, inputted feature data is first connected (concat) into a layer as an input layer. Then, the inputted data passes through a hidden layer composed of several fully connected active layers. Finally, a result of a target function is obtained through a Softmax function after the inputted data passes through an output layer. Two neurons of the output layer output a probability of being the destination and a probability of not being the destination. A loss function used here is a cross entropy cost/loss function. The optimization objective in the training process is to minimize the function. A network parameter is continuously adjusted through a gradient descent method, such that the cost function converges, and finally a better prediction model is obtained.

S203, outputting a target destination of the user at the current moment through the machine learning model.

In a particular embodiment of the present disclosure, the electronic device may output the target destination of the user at the current moment through the machine learning model. Particularly, the electronic device may first calculate a probability value of being selected or a probability value of being unselected that corresponds to the each candidate destination, through the machine learning model. Then, the electronic device may sort all candidate destinations according to the probability value that the each candidate destination is selected or the probability value that the each candidate destination is unselected, and determine the target destination of the user at the current moment according to the sorting result. For example, if a current sample comprises 5 features, which are respectively features 1-5. The features 1-5 are simultaneously inputted into a prediction model, and a probability value (comprising a probability value of being selected or a probability value of being unselected) corresponding to the sample may be obtained through the prediction model. It is assumed that the probability value of being selected is represented as 1 and the probability value of being unselected is represented as 0. The model outputs a probability value of the sample that is 1 and a probability value of the sample that is 0. Here, the sum of the probability value that is 1 and the probability value that is 0 is 1.

S204, recommending the target destination to the user.

In a particular embodiment of the present disclosure, before acquiring the personalized data of the user and the space-time scenario data of the user at the current moment, the electronic device may first train the prediction model. Particularly, the electronic device may use a piece of pre-acquired positive sample data or negative sample data as current sample data. If the prediction model does not satisfy a preset convergence condition, the electronic device inputs the current sample data into the prediction model, to train the prediction model using the current sample data. Then, the electronic device uses next piece of sample data of the current sample data as the current sample data, and repeats the above operation until the prediction model satisfies the convergence condition. Particularly, when constructing a sample, the electronic device may annotate a positive example sample and a negative example sample of a potential destination of the user based on a retrieval record, a frequently visited place and a travel behavior of the user. Then, the electronic device may extract a destination-related attribute as a destination feature, the destination-related attribute comprising a location, a destination type, a tag, etc.; extract a user-related attribute as a user feature, the user-related attribute comprising information such as a gender, an age, an industry, an asset condition, and a consumption level; extract a historical behavior of the user relative to a destination as a behavior feature, the historical behavior comprising a retrieval, a navigation, an arrival, etc.; perform simultaneously format processing on the above features in combination with a space-time scenario comprising information such as time and a distance, to obtain a feature required for training; perform machine learning modeling for a destination prediction problem, to abstract the destination prediction problem into a binary classification problem, that is, discriminate whether a target point of interest is the destination of the user; and define and solve a target h_Θ(x), where Θ represents a model parameter, x represents an inputted feature, and the obtained result is a probability that the point of interest x is a next travel destination of the user. The model alternatively comprises, but not limited to, a conventional machine learning model and a deep learning model, etc. In a model training phase, a cost function J(Θ) may be first defined to measure a deviation between the solution result of the target function and an actual truth value, and the optimization objective is to minimize J(Θ). Training data processed in the feature engineering is inputted into a training program for model training, and Θ is continuously adjusted to minimize J(Θ) until J(Θ) converges to obtain a model having a better effect and the model is saved. After the prediction model is trained, the prediction model may further be evaluated. Particularly, the electronic device may perform a simulation prediction based on an evaluation data set to evaluate an index such as AUC and an accuracy rate of the model, and at the same time evaluate and compare the model effect by perform manual sampling. Finally, the electronic device may develop an online prediction service for the input/output of the prediction model; and put a model file produced through the training into the online prediction service and provide a service. The main difference between the present disclosure and the conventional method lies in the introduction of the machine learning method in which whether a destination is the destination of the user is comprehensively discriminated by combining features such as a destination attribute, a user attribute, a relationship between a user and a destination, and a space-time attribute. This method has a better effect and is more stable than the conventional method.

According to the embodiment of the present disclosure, the accuracy rate of the destination prediction may be effectively improved using the machine learning method. As compared with an artificial rule and a simple strategy, the rule difficult to be discovered by human beings may be learned through the machine learning method, thereby improving the prediction effect. In particular, the deep learning model may enhance the learning effect of the machine for a nonlinear relationship existing in the features, and may support training for a larger data set while improving the model accuracy, thereby reducing the over-fitting situation. In addition, the prediction service and an other service may be decoupled in engineering, and in a situation where a feature is not changed, only a new model file needs to be put online in each model upgrade without changing an other program logic, thereby improving the stability of the service.

According to the method for predicting a destination provided in the embodiment of the present disclosure, the personalized data of the user and the space-time scenario data of the user at the current moment are first acquired. Then, based on the personalized data of the user, the space-time scenario data of the user at the current moment and the attribute feature of the each pre-determined candidate destination, the target destination of the user at the current moment is predicted through the pre-trained prediction model. Next, the target destination is recommended to the user. That is, according to the present disclosure, the target destination of the user at the current moment may be predicted through the pre-trained prediction model. However, in the existing method of predicting the destination, the destination is only recognized from the most recent travel behavior of the user, or the destination prediction is performed based on statistics and rules. Since the technical means that the target destination of the user at the current moment is predicted through the pre-trained prediction model is adopted in the present disclosure, the technical problems in the existing technology that the accuracy of destination prediction is not high, the existing technology may only be applicable to limited travel scenarios and the user experience is poor are overcome. The technical solution provided by the present disclosure may effectively improve the accuracy of the destination prediction and is suitable for more general travel scenarios, and thus, the user experience may be improved. In addition, the technical solution in the embodiment of the present disclosure is simple and convenient to be implemented and easy to be popularized, and has a wider application range.

### Third Embodiment

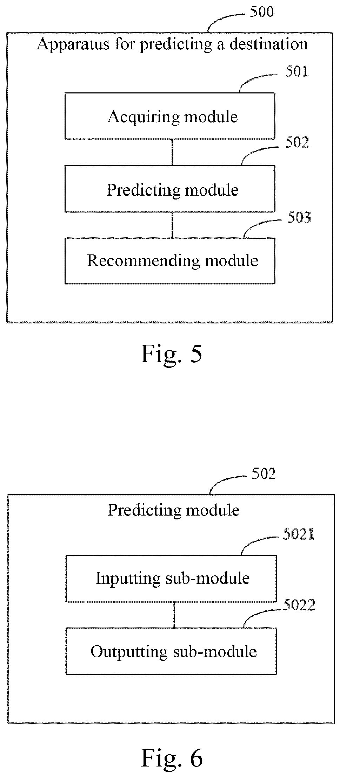

Fig. 5 is a schematic structural diagram of an apparatus for predicting a destination provided in an embodiment of the present disclosure. As shown in Fig. 5, the apparatus 500 comprises: an acquiring module 501, a predicting module 502 and a recommending module 503. Here,
the acquiring module 501 is configured to acquire personalized data of a user and space-time scenario data of the user at a current moment;
the predicting module 502 is configured to predict, through a pre-trained prediction model, a target destination of the user at the current moment based on the personalized data of the user, the space-time scenario data of the user at the current moment and an attribute feature of each pre-determined candidate destination; and
the recommending module 503 is configured to recommend the target destination to the user.

Further, the personalized data comprises at least user feature data and behavior feature data. Here, the user feature data comprises at least one of: a gender, an age, an occupation category, an industry to which the user belongs, a company to which the user belongs, an income level, an asset condition, or a consumption level, the behavior feature data comprises at least one of: a retrieval location, a navigation location, or a arrival location, and the attribute feature comprises at least one of: location coordinates of the each candidate destination, a type of a point of interest, or a location tag.

Fig. 6 is a schematic structural diagram of a predicting module provided in an embodiment of the present disclosure. As shown in Fig. 6, the predicting module 502 comprises: an inputting sub-module 5021 and an outputting sub-module 5022. Here,
the inputting sub-module 5021 is configured to input the personalized data of the user, the space-time scenario data of the user at the current moment and the attribute feature of the pre-determined candidate destination into a pre-trained machine learning model, the machine learning model comprising, but not limited to, a linear model, a tree model, and a neural network model; and
the outputting sub-module 5022 is configured to output the target destination of the user at the current moment through the machine learning model.

Further, the outputting sub-module 5022 is configured to: calculate, through the machine learning model, a probability value of being selected or a probability value of being unselected, corresponding to the each candidate destination; and sort all candidate destinations according to the probability value that the each candidate destination is selected or the probability value that the each candidate is unselected, and determine the target destination of the user at the current moment according to the sorting result.

Further, the apparatus further comprises a training module 504 (not shown in the drawing). The training module 504 is configured to: use a piece of pre-acquired positive sample data or negative sample data as current sample data; input the current sample data into the prediction model if the prediction model does not satisfy a preset convergence condition, to train the prediction model using the current sample data; and use next piece of sample data of the current sample data as the current sample data, and repeat the above operation until the prediction model satisfies the convergence condition.

The above apparatus for predicting a destination may perform the method provided in any of the embodiments of the present disclosure, and possess functional modules for performing the method and corresponding beneficial effects. For technical details not described in detail in this embodiment, reference may be made to the method for predicting a destination provided in any of the embodiments of the present disclosure.

### Fourth Embodiment

According to an embodiment of the present disclosure, the present disclosure further provides an electronic device and a readable storage medium.

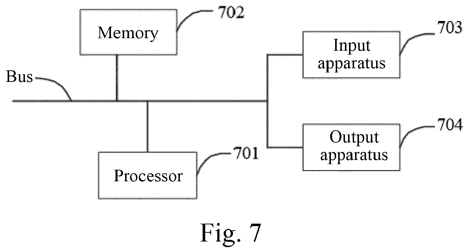

As shown in Fig. 7, which is a block diagram of an electronic device of a method for predicting a destination according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processing, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 7, the electronic device comprises: one or more processors 701, a memory 702, and interfaces for connecting various components, comprising high-speed interfaces and low-speed interfaces. The various components are connected to each other using different buses, and may be installed on a common motherboard or in other methods as needed. The processor may process instructions executed within the electronic device, comprising instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 7, one processor 701 is used as an example.

The memory 702 is a non-transitory computer readable storage medium provided by the present disclosure. The memory stores instructions executable by at least one processor, so that the at least one processor performs the method for predicting a destination provided by the present disclosure. The non-transitory computer readable storage medium of the present disclosure stores computer instructions for causing a computer to perform the method for predicting a destination provided by the present disclosure.

The memory 702, as a non-transitory computer readable storage medium, may be used to store non-transitory software programs, non-transitory computer executable programs and modules, such as program instructions/modules corresponding to the method for predicting a destination in the embodiments of the present disclosure (for example, the acquiring module 501, the predicting module 502, and the recommending module 503 shown in Fig. 5). The processor 701 executes the non-transitory software programs, instructions, and modules stored in the memory 702 to execute various functional applications and data processing of the server, that is, to implement the method for predicting a destination in the foregoing method embodiment.

The memory 702 may comprise a storage program area and a storage data area, where the storage program area may store an operating system and at least one function required application program; and the storage data area may store data created by the use of the electronic device according to the method for predicting a destination, etc. In addition, the memory 702 may comprise a high-speed random access memory, and may also comprise a non-transitory memory, such as at least one magnetic disk storage device, a flash memory device, or other non-transitory solid-state storage devices. In some embodiments, the memory 702 may optionally comprise memories remotely provided with respect to the processor 701, and these remote memories may be connected to the electronic device of the method for predicting a destination through a network. Examples of the above network comprise but are not limited to the Internet, intranet, local area network, mobile communication network, and combinations thereof.

The electronic device of the method for predicting a destination may further comprise: an input apparatus 703 and an output apparatus 704. The processor 701, the memory 702, the input apparatus 703, and the output apparatus 704 may be connected through a bus or in other methods. In Fig. 7, connection through a bus is used as an example.

The input apparatus 703 may receive input digital or character information, and generate key signal inputs related to user settings and function control of the electronic device of the method for predicting a destination, such as touch screen, keypad, mouse, trackpad, touchpad, pointing stick, one or more mouse buttons, trackball, joystick and other input apparatuses. The output apparatus 704 may comprise a display device, an auxiliary lighting apparatus (for example, LED), a tactile feedback apparatus (for example, a vibration motor), and the like. The display device may comprise, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may comprise: being implemented in one or more computer programs that may be executed and/or interpreted on a programmable system that comprises at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) comprise machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, comprising machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (comprising acoustic input, voice input, or tactile input) may be used to receive input from the user.

The systems and technologies described herein may be implemented in a computing system that comprises backend components (e.g., as a data server), or a computing system that comprises middleware components (e.g., application server), or a computing system that comprises frontend components (for example, a user computer having a graphical user interface or a web browser, through which the user may interact with the implementations of the systems and the technologies described herein), or a computing system that comprises any combination of such backend components, middleware components, or frontend components. The components of the system may be interconnected by any form or medium of digital data communication (e.g., communication network). Examples of the communication network comprise: local area networks (LAN), wide area networks (WAN), the Internet, and blockchain networks.

The computer system may comprise a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host. The server is a host product in the cloud computing service system to solve the defect of difficult management and weak business scalability of traditional physical hosts and VPS services.

According to the technical solution in the embodiments of the present disclosure, personalized data of a user and space-time scenario data of the user at a current moment are first acquired. Then, based on the personalized data of the user, the space-time scenario data of the user at the current moment and an attribute feature of each pre-determined candidate destination, a target destination of the user at the current moment is predicted through a pre-trained prediction model. Next, the target destination is recommended to the user. That is, according to the present disclosure, the target destination of the user at the current moment may be predicted through the pre-trained prediction model. However, in the existing method of predicting the destination, the destination is only recognized from the most recent travel behavior of the user, or the destination prediction is performed based on statistics and rules. Since the technical means that the target destination of the user at the current moment is predicted through the pre-trained prediction model is adopted in the present disclosure, the technical problems in the existing technology that the accuracy of destination prediction is not high, the existing technology may only be applicable to limited travel scenarios and the user experience is poor are overcome. The technical solution provided by the present disclosure may effectively improve the accuracy of the destination prediction and is suitable for more general travel scenarios, and thus, the user experience may be improved. In addition, the technical solution in the embodiment of the present disclosure is simple and convenient to be implemented and easy to be popularized, and has a wider application range.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure may be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be comprised in the protection scope of the present disclosure.

## Claims

1. A method for predicting a destination, comprising:
acquiring (S101) personalized data of a user and space-time scenario data of the user at a current moment;
predicting (S102), through a pre-trained prediction model, a target destination of the user at the current moment based on the personalized data, the space-time scenario data and an attribute feature of each pre-determined candidate destination; and
recommending (S103) the target destination to the user.

2. The method according to claim 1, wherein the personalized data comprises at least user feature data and behavior feature data, the user feature data comprises at least one of: a gender, an age, an occupation category, an industry to which the user belongs, a company to which the user belongs, an income level, an asset condition, or a consumption level, the behavior feature data comprises at least one of: a retrieval location, a navigation location, or a arrival location, and the attribute feature comprises at least one of: location coordinates of the each candidate destination, a type of a point of interest, or a location tag.

3. The method according to any one of claims 1-2, wherein the predicting (S102) comprises:
inputting (S202) the personalized data, the space-time scenario data and the attribute feature into a pre-trained machine learning model, the machine learning model comprising a linear model, a tree model, and a neural network model; and
outputting (S203) the target destination through the machine learning model.

4. The method according to claim 3, wherein the outputting (S203) comprises:
calculating, through the machine learning model, a probability value of being selected or a probability value of being unselected, corresponding to the each candidate destination; and
sorting all candidate destinations according to the probability value of being selected or the probability of being unselected, and determining the target destination according to the sorting result.

5. The method according to any one of claims 1-4, wherein before the acquiring (S101) the method further comprises:
using a piece of pre-acquired positive sample data or negative sample data as current sample data; and
inputting the current sample data into the prediction model if the prediction model does not satisfy a preset convergence condition, to train the prediction model with the current sample data; and using next piece of sample data of the current sample data as the current sample data, and repeating the above operation until the prediction model satisfies the convergence condition.

6. An apparatus for predicting a destination, comprising an acquiring module, a predicting module and a recommending module, wherein
the acquiring module (501) is configured to acquire personalized data of a user and space-time scenario data of the user at a current moment;
the predicting module (502) is configured to predict, through a pre-trained prediction model, a target destination of the user at the current moment based on the personalized data, the space-time scenario data and an attribute feature of each pre-determined candidate destination; and
the recommending module (503) is configured to recommend the target destination to the user.

7. The apparatus according to claim 6, wherein the personalized data comprises at least user feature data and behavior feature data, the user feature data comprises at least one of: a gender, an age, an occupation category, an industry to which the user belongs, a company to which the user belongs, an income level, an asset condition, or a consumption level, the behavior feature data comprises at least one of: a retrieval location, a navigation location, or a arrival location, and the attribute feature comprises at least one of: location coordinates of the each candidate destination, a type of a point of interest, or a location tag.

8. The apparatus according to any one of claims 6-7, wherein the predicting module (502) comprises an inputting sub-module and an outputting sub-module, wherein
the inputting sub-module (5021) is configured to input the personalized data, the space-time scenario data and the attribute feature into a pre-trained machine learning model, the machine learning model comprising a linear model, a tree model, and a neural network model; and
the outputting sub-module (5022) is configured to output the target destination through the machine learning model.

9. The apparatus according to claim 8, wherein the outputting sub-module (5022) is configured to: calculate, through the machine learning model, a probability value of being selected or a probability value of being unselected, corresponding to the each candidate destination; and sort all candidate destinations according to the probability value of being selected or the probability value of being unselected, and determine the target destination according to the sorting result.

10. The apparatus according to any one of claims 6-9, further comprising a training module, wherein the training module is configured to: use a piece of pre-acquired positive sample data or negative sample data as current sample data; input the current sample data into the prediction model if the prediction model does not satisfy a preset convergence condition, to train the prediction model with the current sample data; and use next piece of sample data of the current sample data as the current sample data, and repeat the above operation until the prediction model satisfies the convergence condition.

11. An electronic device, comprising:
at least one processor (701); and
a memory (702), communicated with the at least one processor (701),
wherein the memory (702) stores an instruction executable by the at least one processor (701), and the instruction is executed by the at least one processor (701), to enable the at least one processor (701) to perform the method according to any one of claims 1-5.

12. A non-transitory computer readable storage medium, storing a computer instruction, wherein the computer instruction is used to cause a computer to perform the method according to any one of claims 1-5.

13. A computer program product comprising a computer program, the computer program, when executed by a processor (701), implementing the method according to any one of claims 1-5.
